(19) Europäisches Patentamt
European Patent Office
Office européen des brevets

(11) **EP 2 386 899 A1**

(12) **EUROPEAN PATENT APPLICATION**
published in accordance with Art. 153(4) EPC

(43) Date of publication:
**16.11.2011 Bulletin 2011/46**

(51) Int Cl.:
***G02B 27/22*** *(2006.01)*

(21) Application number: **09837621.3**

(22) Date of filing: **11.02.2009**

(86) International application number:
**PCT/KR2009/000634**

(87) International publication number:
**WO 2010/079860 (15.07.2010 Gazette 2010/28)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **07.01.2009 KR 20090000975**

(71) Applicant: **Chung, Hyunin**
**Seoul 142-100 (KR)**

(72) Inventor: **Chung, Hyunin**
**Seoul 142-100 (KR)**

(74) Representative: **Winkler, Andreas Fritz Ernst**
**Forrester & Boehmert**
**Pettenkoferstrasse 20-22**
**80336 München (DE)**

(54) **THREE DIMENSIONAL SURFACE SHEET USING TOTAL REFLECTION**

(57) Disclosed therein is a beautiful and clear three-dimensional sheet, which includes a lens array formed on one side of a plastic sheet and having a plurality of hemispherical convex lenses arranged in columns and rows and embossed or engraved patterns formed on the other side of the plastic sheet by a plane total reflection angle, so that the uneven patterns appear to be enlarged and glitter like diamonds when they are viewed from the front of the convex lenses to thereby provide an effect that the patterns appear to hang in the air or to be sunken from the surface of the sheet. The three-dimensional sheet includes: a convex lens layer (10) molded of transparent synthetic resin or glass, the convex lens layer (10) having a plurality of hemispherical convex lenses (11) arranged in columns and rows on the upper face thereof; a transparent layer (20) located beneath the convex lens layer (10) for controlling a focal distance of the convex lenses (11); and an uneven pattern layer (30) located beneath the transparent layer (20) and having a pattern arrangement structure that embossed or engraved patterns are arranged at the same angle as convex lenses (11) of the convex lens layer (10), the uneven pattern layer (30) having uneven patterns (31) each having a section with an oblique angle larger than a plane total reflection angle (35) at the point of time that an observer observes the three-dimensional pattern, wherein the convex lens layer (10), the transparent layer (20) and the uneven pattern layer (30) are integrated into one sheet.

FIG. 1

EP 2 386 899 A1

**Description**

**BACKGROUND OF THE INVENTION**

**Field of the Invention**

The present invention relates to a three-dimensional sheet by total reflection using integral photography. More particularly, the present invention relates to a beautiful and clear three-dimensional sheet, which includes a lens array formed on one side of a plastic sheet and having a plurality of hemispherical convex lenses arranged in columns and rows and embossed or engraved patterns formed on the other side of the plastic sheet by a plane total reflection angle, so that the uneven patterns appear to be enlarged and glitter like diamonds when they are viewed from the front of the convex lenses to thereby provide an effect that the patterns appear to hang in the air or to be sunken from the surface of the sheet.

**Background Art**

Integral photography was invented by M. G. Lippmann in France in 1908, but at that time, it was difficult to put the integral photography to practical use since it required a highly precise working technology and a high-resolution photography technology.

In general, a conventional technology could produce a 3-dimensional printed matter through a highly precise printing to form the same pattern as a lens array on the rear face of the lens array. Furthermore, the conventional technology used a method to remove the Moire Phenomenon, which may occur in the printing technique by separating a printer layer of the focal distance from a printed layer of the non-focal distance of the lens array, or a method to minimize the Moire Phenomenon by controlling the printing halftone angle.

However, such methods have several problems in that it is difficult to print and also difficult that those unskilled easily mass-produce since they require a precise printing. That is, it is very complicated to control colors of graphic patterns and express a clear three-dimensional effect since offset printing must be expressed by high-solution printing halftone.

Moreover, as one of conventional technologies, there is a 'double lens sheet', which has convex lenses formed on both sides thereof in such a way that the convex lenses formed on one side are seen three-dimensionally or make unspecific wave patterns when they are seen through a lens array of the other side. The double lens sheet also has several problems as follows.

The convex lenses formed on both sides of the sheet were used to raise the Moire phenomenon with each other to thereby make wave patterns or provide a three-dimensional effect, and for this, a lens array that lenses are cross-aligned at an angle of 60 degrees in the form of the compound eyes of insects was mainly used.

Here, in order to produce the wave patterns, the surface of the lens array cross-aligned at an angle of 60 degrees and the surface of embossing (convex lenses) having the same pattern angle beneath the lens array appear to be distorted or twisted to thereby produce the unspecific wave patterns. In order to raise the distorted phenomenon, the 'double lens sheet' having the lens array of the 60 degrees cross-alignment is still more favorable than the 'double lens sheet' having the lens array of the right-angle cross-alignment.

In relation with the three-dimensional effect, the 'double lens sheet' having the 60 degrees cross-alignment must be molded in a state where a lens pattern alignment angle of the upper face is exactly coincided with a lens pattern alignment angle of the lower face. However, it is difficult to express a wanted exact forms three-dimensionally since a molding error tolerance to allow a user to see the exact forms (circles, squares, regular triangles, regular pentagon, stars, exact logos or letters, and so on) with naked eyes, and the forms appear to be distorted al little. Additionally, when the rear face is put on a bright white sheet or thing, there occurs diffused reflection due to the rear reflected light and the three-dimensional form or outline of the rear uneven pattern is not shown. Accordingly, in order to solve the above problems, the conventional technique uses a method to print an expensive reflection ink on the rear face, but it causes a high price and another problem.

**SUMMARY OF THE INVENTION**

Accordingly, the present invention has been made to solve the above-mentioned problems occurring in the prior arts, and it is an object of the present invention to provide a mass-producable three-dimensional sheet by total reflection, which includes a lens array formed on one side of a plastic sheet and having a plurality of hemispherical convex lenses arranged in columns and rows and various and elaborate embossed or engraved patterns formed on the other side of the plastic sheet, thereby being clearly printed by a general offset printing when it is seen from the upper face of the lens array, providing an embossed texture shown by the rear uneven patterns and a clear and rear three-dimensional effect like jewels, making the outlines or forms of the uneven patterns clear and enlarging them without any diffused reflection of the uneven patterns on the rear face even though the three-dimensional sheet is put on a white object or a dark-colored object, providing a clear three-dimensional screen even though the observer observes it at any position without regard to a direction where the sheet is put, raising productivity by solving the problems of the conventional three-dimensional sheet manufacturing method that is difficult, complicated and expensive, and providing a clear three-dimensional image by removing Moire phenomenon occurring by interference between the lens array and the uneven patterns and the offset printing structure.

To accomplish the above object, in an aspect of the present invention, there is provided a three-dimensional sheet by total reflection using integral photography comprising: a convex lens layer molded of transparent synthetic resin or glass, the convex lens layer having a plurality of hemispherical convex lenses arranged in columns and rows on the upper face thereof; a transparent layer located beneath the convex lens layer for controlling a focal distance of the convex lenses; and an uneven pattern layer located beneath the transparent layer and having a pattern arrangement structure that embossed or engraved patterns are arranged at the same angle as convex lenses of the convex lens layer, the uneven pattern layer controlling a three-dimensional effect through a difference in density of the pattern arrangement and having uneven patterns each having a section of a triangle or a trapezoid, an oblique angle of the section of each uneven pattern is larger than a plane total reflection angle at the point of time that an observer observes the three-dimensional pattern, wherein the convex lens layer, the transparent layer and the uneven pattern layer are integrated into one sheet.

In another aspect of the present invention, there is provided a three-dimensional sheet by total reflection using integral photography comprising: a four-color (C, M, Y and K) offset printed layer molded of transparent synthetic resin or glass and located at the uppermost part; a convex lens layer located beneath the four-color (C, M, Y and K) offset printed layer, the convex lens layer having a plurality of hemispherical convex lenses arranged in columns and rows on the upper face thereof; a transparent layer located beneath the convex lens layer for controlling a focal distance of the convex lenses; a curved uneven pattern layer located beneath the transparent layer and having a pattern arrangement structure of the same angle as the convex lens layer, the uneven pattern layer controlling a three-dimensional effect through a difference in density of the pattern arrangement and having uneven patterns each having a section of a hemisphere or a bell shape, a side angle of the section of each uneven pattern is larger than a total reflection angle at the point of time that an observer observes the three-dimensional pattern; and a rear printed layer projected by total reflection by a translucent ink located beneath the curved uneven pattern layer, wherein the four-color (C, M, Y and K) offset printed layer, the convex lens layer, the transparent layer, the curved uneven pattern layer, and the translucent rear printed layer are integrated into one sheet.

## BRIEF DESCRIPTION OF THE DRAWINGS

The above and other objects, features and advantages of the present invention will be apparent from the following detailed description of the preferred embodiments of the invention in conjunction with the accompanying drawing, in which:

FIG. 1 is an exploded perspective view of a three-dimensional sheet by total reflection using integral photography according to a first preferred embodiment of the present invention;

FIG. 2 is a sectional view of the three-dimensional sheet;

FIG. 3 is a partially enlarged sectional view of the three-dimensional sheet;

FIG. 4 is another partially enlarged sectional view of the three-dimensional sheet;

FIG. 5 is a further partially enlarged sectional view of the three-dimensional sheet;

FIG. 6 is an exploded perspective view of a three-dimensional sheet by total reflection using integral photography according to a second preferred embodiment of the present invention;

FIG. 7 is a front view of the three-dimensional sheet according to the second preferred embodiment of the present invention;

FIG. 8 is a sectional view of the three-dimensional sheet according to the second preferred embodiment;

FIG. 9 is a partially enlarged sectional view of the three-dimensional sheet according to the second preferred embodiment;

FIG. 10 is another partially enlarged sectional view of the three-dimensional sheet according to the second preferred embodiment; and

FIG. 11 is a plan view showing an arrangement structure of a convex lens layer of the present invention.

## DETAILED DESCRIPTION OF THE PREFERRED EMBODIMENT

Reference will be now made in detail to the preferred embodiment of the present invention with reference to the attached drawings.

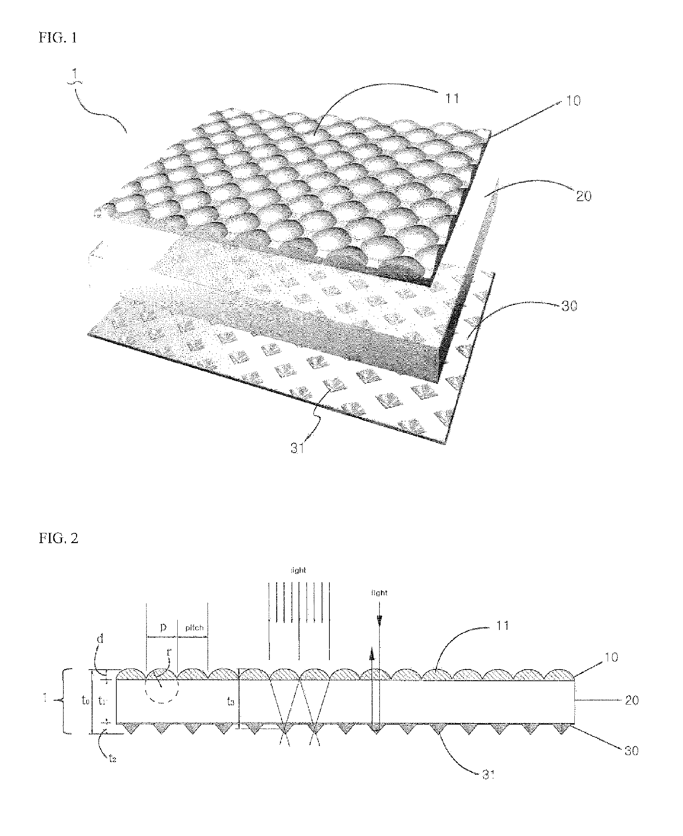

As shown in FIGS. 1 to 5, a convex lens layer 10 is formed on the uppermost part of a three-dimensional sheet 1 according to the first preferred embodiment of the present invention.

The convex lens layer 10 is molded of transparent synthetic resin or glass and has hemispherical convex lenses 11 arranged in columns and rows on the upper face thereof.

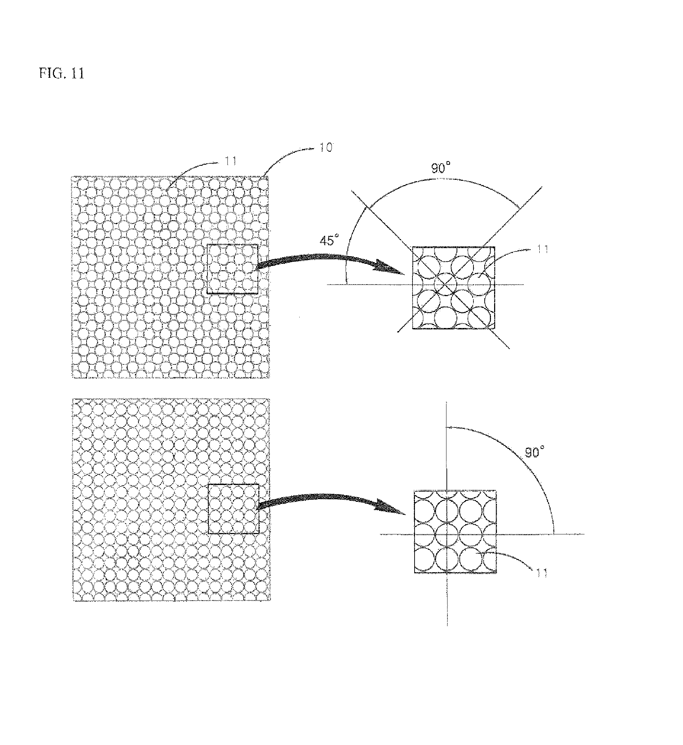

As shown in FIG. 11, the convex lenses 11 arranged in columns and rows on the convex lens layer 10 are arranged in such a way that a crossing line angle of virtual lines is at an angle of 90 degrees so that the convex lenses 11 respectively form a slop of 45 degrees. According to circumstances, the convex lenses 11 may form a horizontal arrangement or another arrangement angle, but the 45° arrangement is the most stable in an aspect of a three-dimensional effect.

The conventional double-sided uneven sheet mainly uses convex lenses of a beehive pattern with 0°, 60° or 120° crossing-arrangement. However, as described above, in order to express the three-dimensional effect, the 'double-sided lens sheet' with the 60° crossing-arrangement can be enlarged as the exact forms (circles, squares, regular triangles, regular pentagon, stars, exact logos or letters, and so on) and provide the three-dimensional effect only when it is molded in a state where a lens pattern arrangement angle of the upper face is exactly coincided with a lens pattern arrangement angle of the lower face. But it is difficult that the exact forms are expressed three-dimensionally since a molding error tolerance in the 0°, 60° or 120° crossing-arrangements is too narrow, and hence, a lens pattern arrangement with a crossing angle of 90 degrees is preferable in molding.

A transparent layer 20 is located beneath the convex lens layer 10. The transparent layer 20 is constructed of a sheet form and has a thickness to subtract a thickness (d) of the convex lens and a halfheight of each uneven pattern 31 beneath the transparent layer 20 from a focal distance (t3) of the convex lens 11. The thickness of the transparent layer 20 will be described again as follows.

An uneven pattern layer 30 is formed beneath the transparent layer 20. The uneven pattern layer 30 has the same arrangement angle as the convex lens layer 10. The uneven patterns 31 are adjusted in their three-dimensional depth and prominence and each of the uneven patterns 31 is also adjusted in its enlargement ratio in such a way that density of the uneven patterns 31 is controlled to be just a little smaller or larger than the 1:1 ratio of the uneven patterns to the lens patterns of the convex lens layer. It is a technique using the basic principle of integral photography (hereinafter, called IP), and the technique is mainly used as a simple control technique to control the three-dimensional effect of the rear pattern.

The uneven pattern layer 30 has a number of the uneven patterns 31 of an embossed form, and in this instance, there is a great difference in three-dimensional effect according to how the form of the uneven pattern 31 is made. For instance, conventionally, the uneven pattern 31 is mainly made of a hemispherical convex lens form, but it cannot sufficiently show merits of a transparent material in a three-dimensional expression. That is, a polyhedron, which is capable of being expressed only in a transparent material and sparking like a jewel, cannot show the three-dimensional effect due to its complicated and minute molding structure.

However, in the three-dimensional sheet 1 according to the present invention, the uneven patterns 31 are manufactured specially in such a way as to be shown three-dimensionally as if a plurality of diamonds are hidden in or on the sheet at regular intervals. It is a method to make the most use of the total reflection, which is possible only in the transparent material. That is, total reflection is caused when incident light entering through the convex lenses 11 reaches the uneven patterns 31 of the rear face, and it raises the three-dimensionally sparking effect since fine faces reflect light to each other like mirrors such that they appear to be enlarged in the form of jewels when you see them with naked eyes.

Since each of the uneven patterns 31 has a predetermined height and incident light enters through each of the convex lenses 11, on the assumption that a distance to a condensing position' where light is concentrated the most from the convex lens 11 is the focal distance (t3), it is preferable that the transparent layer 20 is controlled as thin as the halfheight of the uneven pattern 31 so that a middle point of the height of the uneven pattern 31 becomes the focal distance from the convex lens 11. Even though the embossed form is shown three-dimensionally, the summit of a triangular pyramid of the uneven pattern 31 may be seen dimly if the focal distance ranges to the bottom face of the transparent layer 20, and it may cause commercially deteriorated products. Accordingly, it is preferable that the focal distance (t3) of the incident light entering through the convex lenses 11 exists within a visual range of an error tolerance that people can clearly see the entire heights of the uneven patterns 31 with naked eyes in three dimensions.

The focal distance 9t3) of each convex lens 11 and the height of the transparent layer 20 can be obtained through the following Expression 1.

Expression 1

$$r = \frac{\left(\frac{p}{2}\right)^2 + d^2}{2d}$$

$$t_3 = \frac{n}{n-1} r$$

$$t_1 = \left(\frac{n}{n-1} r\right) - \frac{t_2}{2} - d$$

wherein r is the radiums of curvature of the convex lens 11, p is a distance between the convex lenses 11, d is a thickness of the convex lens 11, t3 is a focal distance of the convex lens 11, n is a refractive index of a transparent material, t1 is a height of the transparent layer 20, and t2 is a height of the uneven pattern 31.

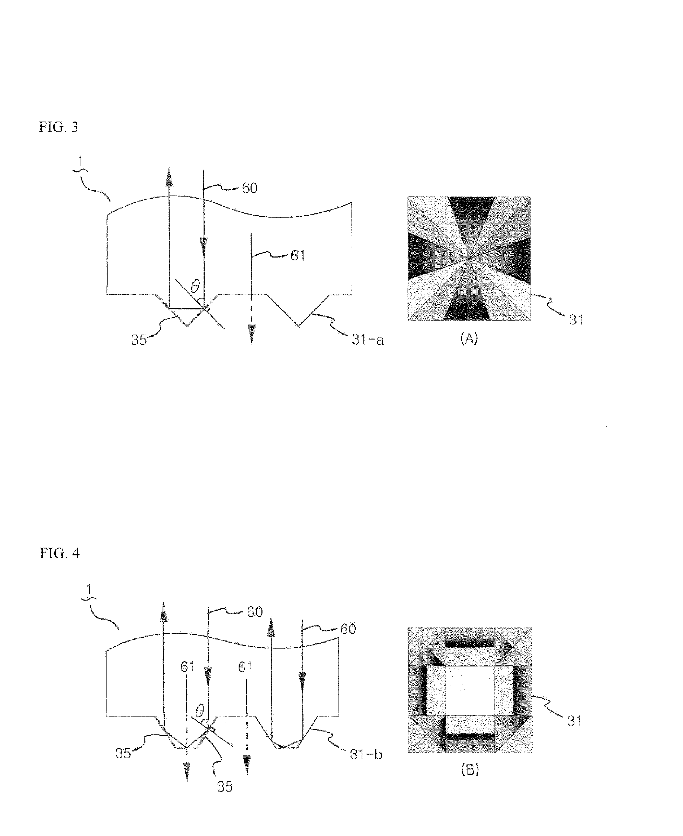

FIGS. 3 to 5 are views for explaining a direction of light to achieve total reflection with the three-dimensional pattern. It can be achieved when the uneven pattern 31 has a section of a straight and bent form. The total reflection occurs on the section of the uneven pattern 31 when an incident angle of light entering through the convex lens 11 is above a critical angle. Here it is important total reflection occurs on the uneven patterns 31 (total reflection zone 60) and does not occur (61) on predetermined spaces (penetration zone 61) in order to double the effect. If the uneven patterns 31 are formed without any spaces and total reflection occurs entirely, a severely diffused reflection owing to interference rays of the uneven patterns 31 may prevent the three-dimensional effect.

FIG. 3 illustrates a form of the section of each uneven pattern 31, wherein the section of the uneven pattern 31 is formed in a quadrangular pyramid with an oblique angle of 45 degrees. In general, since the critical angle causing total reflection is varied according to a refractive index of transparent materials, in case that the transparent material is polypropyrene, a refractive index is 1.49 and a critical angle is 42.1552°. Accordingly, in the section of the uneven pattern 31, when the oblique angle of the quadrangular pyramid is 45°, incident angle or total reflection of an observation time point occur sufficiently, and the outline of the uneven pattern 31 can be expressed clearly due to a contrast between the total reflection zone of the incident light and a backlight zone of the space by penetration of the incident light.

Since total reflection does not occur if the oblique angle of the quadrangular pyramid is less than 42°, it is difficult to obtain a clear three-dimensional effect within a visible angle where people can obtain the three-dimensional effect. It is necessary to carry out an elaborate molding work in order to mold each of the uneven patterns 31. Accordingly, the uneven pattern layer 30 may be manufactured through an exact design applying a lithography technique, which is one of semiconductor designing and molding techniques, and the lithography technique is not restricted in the present invention.

FIG. 3(A) illustrates total reflection and a three-dimensional effect viewed from the front of each uneven pattern (31-a).

FIG. 4 illustrates another example of each uneven pattern 31, wherein the uneven pattern 31 is formed of a rectangular trapezoid with an oblique angle of 53°. FIG. 4(B) illustrates total reflection and a three-dimensional effect viewed from the front of each uneven pattern (31-b).

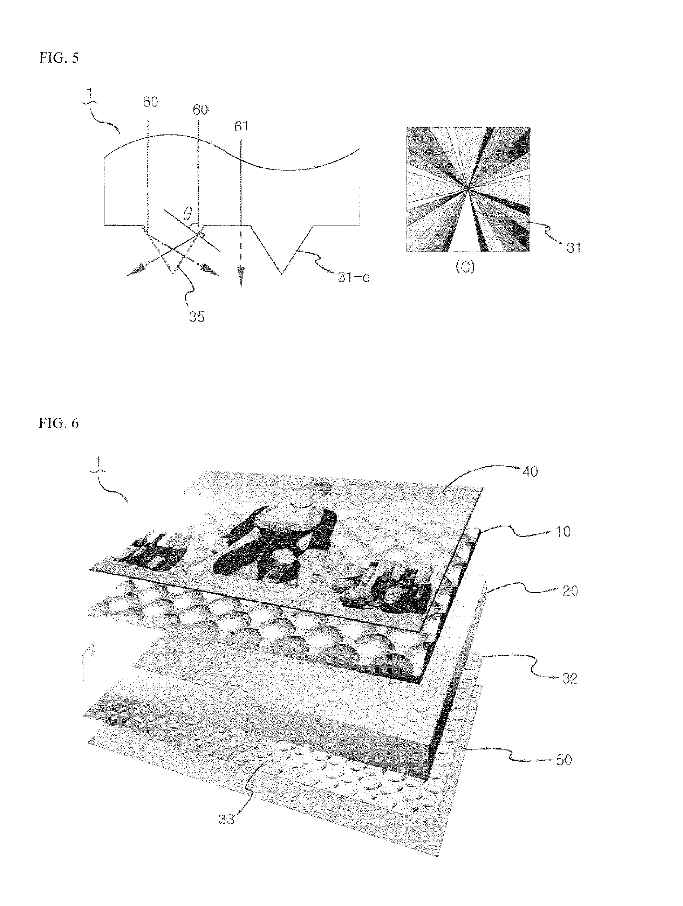

FIG. 5 illustrates a further example of each uneven pattern 31, wherein the uneven pattern 31 is formed of a quadrangular pyramid with an oblique angle of 60°. FIG. 5(C) illustrates total reflection and a three-dimensional effect viewed from the front of each uneven pattern (31-c). In FIGS. 3(A), 4(B) and 5(C), the uneven patterns 31 are formed of a rectangle, but the shape of the uneven pattern 31 is not restricted, namely, may be a hexagon, a star, and so on.

FIGS. 6 to 10 illustrate a three-dimensional sheet 1 according to a second preferred embodiment of the present invention, showing a four-color (C, M, Y and K) offset printed layer 40 and a clear three-dimensional effect on the three-dimensional sheet 1.

FIG. 6 is an exploded perspective view of the three-dimensional sheet according to the second preferred embodiment of the present invention.

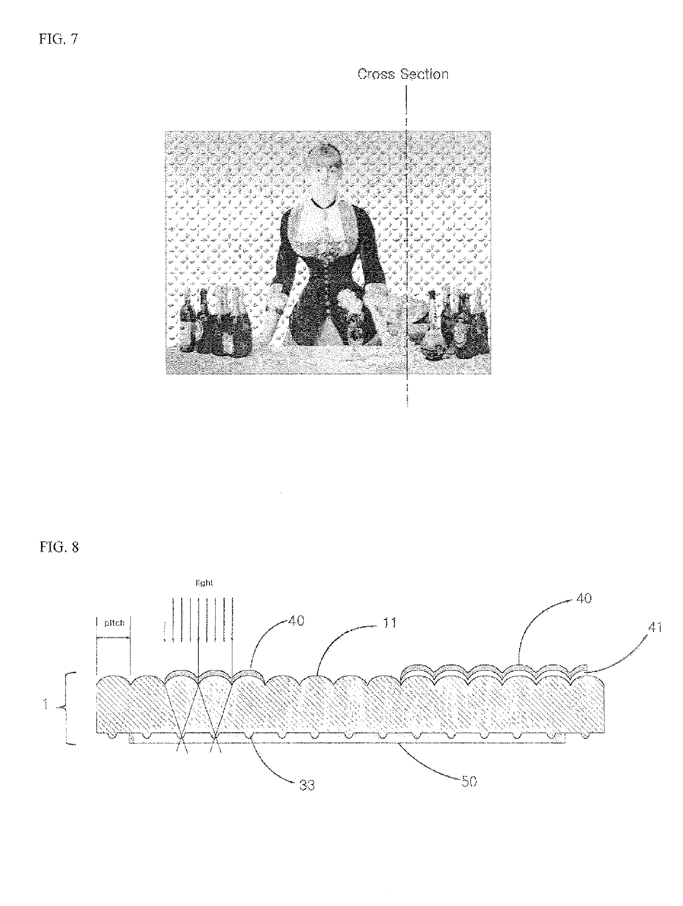

FIG. 7 is a front view of the three-dimensional sheet according to the second preferred embodiment.

FIG. 8 is a sectional view of the three-dimensional sheet according to the second preferred embodiment. The four-color (C, M, Y and K) offset printed layer 40 is formed on the uppermost part of the three-dimensional sheet 1. The four-color (C, M, Y and K) offset printed layer 40 is located on the upper face of a convex lens layer 10. However, a general offset printing may cause a problem since it is not easy to directly carry out the offset printing on the surfaces of the convex lenses due to the curved surfaces of the lenses. Accordingly, in order to carry out the offset printing evenly on the entire curved surfaces of the convex lenses 11, it is preferable to use a rubber blanket of an offset is as soft as its hardness is less than 70.

Moreover, Moire phenomenon occurs since there is a visual interference between backlight of a curved uneven pattern layer 32 of the rear face and a halftone screen angle of the front offset printing. Accordingly, in order to solve the above problem, it is preferable that density of screen halftone of the four-color (C, M, Y and K) offset printed layer 40 is more than 300 lpi and the halftone screen angle is controlled into an angle, which does not cause Moire phenomenon according to the fine density of screen halftone. Alternatively, a four-color (C, M, Y and K) offset printing using FM halftone screen may be used. The four-color (C, M, Y and K) offset printed layer 40 is printed on the upper face of the three-dimensional sheet 1 of the present invention, and serves to be seen risen or sunken relative to the curved uneven pattern layer 32 of the rear face, which is shown three-dimensionally.

Since inks of the four-color (C, M, Y and K) offset printing have a translucent property, it is preferable that an important main portion is printed with a white ink 41 of the concealability property on the bottom face of the four-color (C, M, Y and K) offset printed layer 40 to thereby prevent that the curved uneven, pattern layer 32 of the rear face is projected. Additionally, the four-color (C, M, Y and K) offset printed layer 40 at a portion where the white ink 41 is not printed can provide a naturally three-dimensional color effect since colors of the printed layer and the curved uneven pattern layer 32 of the rear face are projected in three dimensions.

As described above, the convex lens layer 10 is formed beneath the bottom faces of the four-color (C, M, Y and K) offset printed layers 40 and 41, a transparent layer 20 having a thickness corresponding to the focal distance of the convex lenses 11 is formed beneath the convex lens layer 10, and the curved uneven pattern layer 32 is formed beneath the transparent layer 20.

The curved uneven pattern layer 32 has a plurality of curved uneven patterns 33 different from a sectional structure of the uneven patterns 31 described in the first preferred embodiment. It is preferable that a section of each of the curved uneven patterns 33 is nearly hemispheric or in a somewhat long parabolic shape. The reason that a generally curved unevenness has a curved surface angle (36), which can raise some total reflection, but an area of total reflection gets narrower to be disappeared as the hemispherical form is near a plate form. The critical angle of incident light exists within an angle of view to observe a solid even though it is in a hemispherical form, and as described above, if the critical angle is less than 42°, total reflection is disappeared. The problem is still caused even though the section of the curved uneven pattern 33 is near a hemisphere raising total reflection. Such a three-dimensional sheet is mainly adhered or put on an object. While the outline of the curved uneven pattern 33 is enlarged to be seen clearly in case that the three-dimensional sheet is adhered or put on the object of a dark background, it is difficult to see the outline of the curved uneven pattern 33 since there occurs diffused reflection due to reflected light of the rear of the object to incident light of the front in case that the three-dimensional sheet is adhered or put on the object of a bright or white background. Accordingly, in order to solve the above problem, a translucent rear printed layer 50 is formed beneath the curved uneven pattern layer 32.

The translucent rear printed layer 50 formed beneath the curved uneven pattern layer 32 makes a shade more clear since it adds total reflection, which occurs in a transparent medium of a translucent ink 51, to the shade formed by total reflection. That is, the outline of the curved uneven pattern 33 is seen clearly since it is reflected on a dark-colored object as a bright translucent color but reflected on a bright-colored or white object as a dark translucent color.

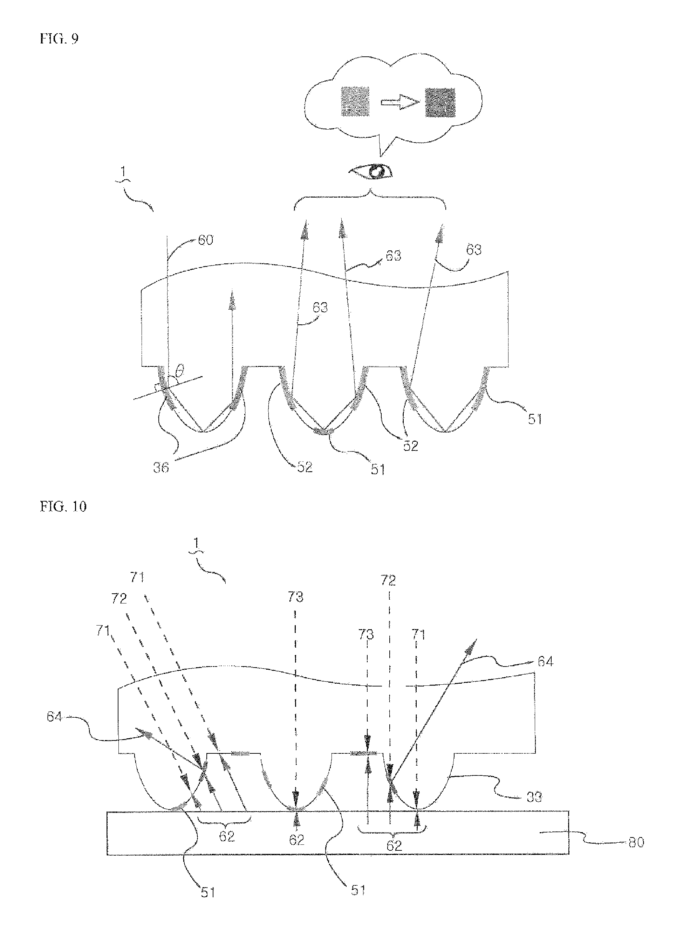

The principle is that total reflection is to reflect the front incident light stronger than backlight. When the background is dark, a bright light of the front incident light is total-reflected, so that a user feels a difference between the reflected light and the dark color of the space of the curved uneven pattern 33 as the outline. However, such a function of total reflection still has a problem as described above. When the three-dimensional sheet 1 is adhered or put on the white object or a white sheet 80, it is difficult to discriminate a difference in brightness between incident light and backlight since a reflected backlight of the white object by the front incident light is generated nearly similarly to specular light of incident light. Accordingly, as shown in FIG. 9, the translucent rear printed layer 50 serves to make the shades at total reflection positions 36 and 52 darker than surrounding light by adding a total reflection 63, which occurs in the transparent medium of the translucent ink 51, to a dark shade formed by total reflection 60 during a partial absorption and partial reflection of light.

The translucent rear printed layer 50 may be formed through a high density printing of more than 300lpi or an FM screen printing using an offset print, and in order to evenly print the entire surface of the curved uneven pattern 33, it is preferable to use a rubber blanket of an offset is as soft as its hardness is less than 70. The translucent rear printed layer 50 may be formed of halftone dots and printed as gradation tones, and can be utilized in controlling colors of the three-dimensionally curved uneven pattern layer 32 clearly. Accordingly the translucent rear printed layer 50 can provide a better three-dimensional effect by total reflection at places where lots of the translucent ink 51 is strained, a little of the translucent ink 51 is stained, and the translucent link 51 is not stained.

Furthermore, the translucent rear printed layer 50 may provide another effect according to printing methods. The translucent rear printer layer 50 may be shown not as a simple-colored printed layer but as another three-dimensionally printed layer. That is, when the translucent rear printed layer 50 is printed, a pattern printing, which shows a difference in depth of the three-dimensional effect using a difference in density through an arrangement of the same angle as the pattern arrangement of the lens array of the convex lens layer 10, is carried out. Each of print halftones 51 formed in this instance is a specific figure, which is enlarged three-dimensionally, and in this instance, an opaque ink may be used. Accordingly, the translucent rear printed layer 50 can provide a transparent three-dimensional effect of the uneven pattern layer 30 or 32 and another three-dimensional effect when it is viewed from the front of the convex lens layer 10.

Moreover, in FIG. 10, arrow lines 71 to 73 indicate a point of time to observe the three-dimensional pattern with naked eyes, and the arrow lines 62 indicate the rear reflected light and shows a route that incident light entering through the three-dimensional sheet 1 is reflected at an observer's point of time by the rear white sheet 80. Since backlight 62 is refracted at a total reflection position 36 on the curved surface, the observer cannot catch backlight at the point of time (72) that the observer sees it with naked eyes, so that a color of the translucent ink 51 is seen dark. Relatively, at the point of time (73) that the observer sees it with naked eyes, since incident light and the rear reflected light are absorbed into the translucent ink 51 as much as the observer can directly see them with naked eyes, the color of the translucent ink is seen more bright than the point of time (72).

If an opaque ink is used instead of the translucent ink 51 onto the translucent rear printed layer 50, it absorbs the incident light as it is to thereby cause diffused reflection. Then, it causes a problem in that there is no difference in shade by total reflection so that the three-dimensional effect may be removed. The conventional method uses an expensive reflection ink in order to make the outline of the curved uneven pattern 33 clear, but it has several problems in that it increases expenses more than the offset printing and decreases a work output. However, the present invention can provide a good three-dimensional effect through an offset printing using translucent color (C, M, Y or translucent mixed color) inks.

As described above, according to the present invention, the three-dimensional sheet can be mass-produced, clearly printed by a general offset printing when it is seen from the upper face of the lens array, indicate an embossed texture shown by the rear uneven patterns as a clear and rear three-dimensional pattern as if jewels like diamonds are stuck intro a thin sheet or put on the sheet, produce a multiple three-dimensional effect using the offset printing, make the outlines or forms of the uneven patterns clear and enlarge them without any diffused reflection of the uneven patterns on the rear face even through the three-dimensional sheet is put on a white object or a dark-colored object, provide a clear three-dimensional screen even though the observer observes it at any position without regard to a direction where the sheet is put, raise productivity by solving the problems of the conventional three-dimensional sheet manufacturing method that is difficult, complicated and expensive, and provide a clear three-dimensional image by removing Moire phenomenon occurring by interference between the lens array and the uneven patterns and the offset printing structure.

While the present invention has been described with reference to the particular Illustrative embodiments, it is not to be restricted by the embodiments but only by the appended clams. It is to be appreciated that those skilled in the art can change or modify the embodiments without departing from the scope and spirit of the present invention.

**Claims**

1.   A three-dimensional sheet by total reflection using integral photography comprising:

a convex lens layer (10) molded of transparent synthetic resin or glass, the convex lens layer (10) having a plurality of hemispherical convex lenses (11) arranged in columns and rows on the upper face thereof;
a transparent layer (20) located beneath the convex lens layer (10) for controlling a focal distance of the convex lenses (11); and
an uneven pattern layer (30) located beneath the transparent layer (20) and having a pattern arrangement structure that embossed or engraved patterns are arranged at the same angle as convex lenses (11) of the convex lens layer (10), the uneven pattern layer (30) controlling a three-dimensional effect through a difference in density of the pattern arrangement and having uneven patterns (31) each having a section of a triangle or a trapezoid, an oblique angle of the section of each uneven pattern (31) is larger than a plane total reflection angle (35) at the point of time that an observer observes the three-dimensional pattern,
wherein the convex lens layer (10), the transparent layer (20) and the uneven pattern layer (30) are integrated into one sheet.

2. A three-dimensional sheet by total reflection using integral photography comprising:

a four-color (C, M, Y and K) offset printed layer (40) molded of transparent synthetic resin or glass and located at the uppermost part;
a convex lens layer (10) located beneath the four-color (C, M, Y and K) offset printed layer (40), the convex lens layer (10) having a plurality of hemispherical convex lenses (11) arranged in columns and rows on the upper face thereof;
a transparent layer (20) located beneath the convex lens layer (10) for controlling a focal distance of the convex lenses (11);
a curved uneven pattern layer (32) located beneath the transparent layer (20) and having a pattern arrangement structure of the same angle as the convex lens layer (10), the uneven pattern layer (32) controlling a three-dimensional effect through a difference in density of the pattern arrangement and having uneven patterns (33) each having a section of a hemisphere or a bell shape, a side angle of the section of each uneven pattern (33) is larger than a total reflection angle (36) at the point of time that an observer observes the three-dimensional pattern; and
a rear printed layer (50) projected by total reflection by a translucent ink (51) located beneath the cursed uneven pattern layer (32),
wherein the four-color (C, M, Y and K) offset printed layer (40), the convex lens layer (10), the transparent layer (20), the curved uneven pattern layer (32), and the translucent rear printed layer (50) are integrated into one sheet.

3. The three-dimensional sheet according to claim 1 or 2, wherein each of the uneven patterns (31) or each of the curved uneven patterns (33) has a section of a triangle or other polygon or a continued curved line form positioned between predetermined spaces when it is seen at the observer's point of time.

4. The three-dimensional sheet according to claim 1 or 2, wherein the translucent rear printed layer (50) located beneath the uneven pattern layer (30 or 32) has a pattern arrangement structure of the same angle as the convex lens layer (10), controls a depth of the three-dimensional effect through a difference in density of the pattern arrangement, and provides a multiple three-dimensional effect as a second three-dimensional pattern layer together with the uneven pattern layer (30 or 32), which is a first three-dimensional pattern layer, since each of print halftones (51) of the translucent rear printed layer (50) is enlarged into a specific figure, such as a triangle or other polygon or a continued curved line form.
and having uneven patterns (33) each having a section of a hemisphere or a bell shape,

FIG. 1

FIG. 2

FIG. 3

(A)

FIG. 4

(B)

FIG. 5

FIG. 6

FIG. 7

Cross Section

FIG. 8

EP 2 386 899 A1

FIG. 9

FIG. 10

FIG. 11

<table>
<tr><td colspan="2">INTERNATIONAL SEARCH REPORT</td><td>International application No.<br>**PCT/KR2009/000634**</td></tr>
</table>

A. CLASSIFICATION OF SUBJECT MATTER

***G02B 27/22(2006.01)i***

According to International Patent Classification (IPC) or to both national classification and IPC

B. FIELDS SEARCHED

Minimum documentation searched (classification system followed by classification symbols)
IPC G02B 27/22

Documentation searched other than minimum documentation to the extent that such documents are included in the fields searched
Korean Utility models and applications for Utility models since 1975 : IPC above
Japanese Utility models and applications for Utility models since 1975 : IPC above

Electronic data base consulted during the international search (name of data base and, where practicable, search terms used)

eKIPASS (KIPO internal) "Keywords : 3d, image, sheet, pattern, surface, total reflection, and similar term"

C. DOCUMENTS CONSIDERED TO BE RELEVANT

| Category* | Citation of document, with indication, where appropriate, of the relevant passages | Relevant to claim No. |
|---|---|---|
| A | KR 20-0311905 Y (CHUNG, HYUN IN) 09 May 2003<br>See abstract, claims 1-6, figures 1-9. | 1-4 |
| A | KR 10-2008-0105704 A (SEO, JUNG SIK et al.) 04 December 2008<br>See abstract, claims 1-5, figures 1-4. | 1-4 |
| A | KR 20-2008-0006553 U (SUH, JAE HEE) 26 December 2008<br>See abstract, claims 1-2, figures 1-3. | 1-4 |
| A | JP 2006-001153 A (DAINIPPON PRINTING CO.) 05 January 2006<br>See abstract, claims 1-11, figures 1-6. | 1-4 |

☐ Further documents are listed in the continuation of Box C. ☒ See patent family annex.

| * | Special categories of cited documents: | |
|---|---|---|
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 31 MARCH 2009 (31.03.2009) | **31 MARCH 2009 (31.03.2009)** |

| Name and mailing address of the ISA/<br>Korean Intellectual Property Office<br>Government Complex-Daejeon, 139 Seonsa-ro, Daejeon 302-701,<br>Republic of Korea<br>Facsimile No. 82-42-472-7140 | Authorized officer<br><br><br>Telephone No. |
|---|---|

Form PCT/ISA/210 (second sheet) (July 2008)

<table>
<tr><td colspan="2">**INTERNATIONAL SEARCH REPORT**<br>Information on patent family members</td><td>International application No.<br>**PCT/KR2009/000634**</td></tr>
</table>

| Patent document cited in search report | Publication date | Patent family member(s) | Publication date |
|---|---|---|---|
| KR 20-0311905 Y | 09.05.2003 | None | |
| KR 10-2008-0105704 A | 04.12.2008 | None | |
| KR 20-2008-0006553 U | 26.12.2008 | None | |
| JP 2006-001153 A | 05.01.2006 | None | |

Form PCT/ISA/210 (patent family annex) (July 2008)